(19) Europäisches Patentamt / European Patent Office / Office européen des brevets

(11) **EP 3 971 306 A1**

(12) **EUROPEAN PATENT APPLICATION**
published in accordance with Art. 153(4) EPC

(43) Date of publication:
**23.03.2022 Bulletin 2022/12**

(21) Application number: **20826607.2**

(22) Date of filing: **15.06.2020**

(51) International Patent Classification (IPC):
*C21C 7/04* (2006.01)          *C22C 21/00* (2006.01)
*C22C 28/00* (2006.01)          *C22C 30/00* (2006.01)
*B22D 1/00* (2006.01)

(52) Cooperative Patent Classification (CPC):
**B22D 1/00; C21C 7/04; C22C 21/00; C22C 28/00; C22C 30/00**

(86) International application number:
**PCT/JP2020/023389**

(87) International publication number:
**WO 2020/255917 (24.12.2020 Gazette 2020/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.06.2019 JP 2019111705**

(71) Applicant: **JFE Steel Corporation**
**Tokyo 100-0011 (JP)**

(72) Inventors:
• **NISHINAKA Kazuki**
  **Tokyo 100-0011 (JP)**
• **ODAGAKI Tomoya**
  **Tokyo 100-0011 (JP)**
• **FURUMAI Kohei**
  **Tokyo 100-0011 (JP)**
• **ITO Yoichi**
  **Tokyo 100-0011 (JP)**

(74) Representative: **Haseltine Lake Kempner LLP**
**Bürkleinstrasse 10**
**80538 München (DE)**

(54) **METHOD FOR ADDING CA TO MOLTEN STEEL**

(57)     Ca (calcium) is added to molten steel contained in a ladle at a high addition yield by improving the composition of a Ca-containing alloy added to the molten steel.

A method for adding Ca to molten steel according to the present invention includes adding Ca (calcium) to molten steel contained in a ladle by the addition of a Ca-containing alloy (calcium-containing alloy) containing Ca and Mg (magnesium) such that Formula (1) below is satisfied. The Ca-containing alloy is preferably added to the molten steel contained in the ladle after the molten steel has been refined with an RH vacuum degassing apparatus.

$$0.3 \leq \text{Mg content (mass\%)}/\text{Ca content (mass\%)} \leq 1.0 \cdots$$

(1)

EP 3 971 306 A1

**Description**

Technical Field

The present invention relates to a method for adding Ca (calcium) to molten steel contained in a ladle with a high addition yield.

Background Art

In the production of steel for line pipes, free-cutting steel, stainless steel, electrical steel, or the like, it has been common to add Ca (calcium) to molten steel in order to perform morphological control of non-metallic inclusions in the steel and enhance corrosion resistance, mechanical properties, electromagnetic properties, etc. For example, non-metallic inclusions formed in a steelmaking and casting step, such as MnS (manganese sulfide) and $Al_2O_3$ (aluminum oxide), are elongated or crushed in a rolling step and then act as an initiation site of hydrogen induced cracking (HIC) in steel material, such as steel for line pipes. Therefore, in the production of a steel material required to have certain HIC resistance, Ca has been added to molten steel in order to reform the harmful non-metallic inclusions into CaS (calcium sulfide) non-metallic inclusions and CaO (calcium oxide)-$Al_2O_3$ non-metallic inclusions and thereby make the non-metallic inclusions harmless.

For adding Ca to molten steel, it has been common to use a Ca-containing alloy (calcium-containing alloy), such as a Ca-Si (silicon) alloy, a Ca-Fe (iron) alloy, or a Ca-Al (aluminum) alloy, or a Ca compound (calcium compound), such as $CaC_2$ (calcium carbide), $CaCN_2$ (calcium cyanamide), or $CaCl_2$ (calcium chloride), as a Ca source. However, since Ca has a high vapor pressure and a lower density than molten steel, when Ca is added to molten steel, Ca evaporates due to the heat of the molten steel and is being discharged into the atmosphere. Thus, the yield of addition of Ca to molten steel is low.

If the yield of addition of Ca is excessively low, the harmful non-metallic inclusions cannot be reformed to a sufficient degree and, consequently, the morphological control of the non-metallic inclusions cannot be performed with accuracy. Furthermore, if the amount of the Ca-containing substance added is increased with consideration to the low addition yield, the amount of Ca that does not remain in the steel and is wasted is increased. This results in low cost-effectiveness and increases the costs of production of the steel material. Therefore, it is an important issue to increase the yield of addition of Ca in the addition of Ca to molten steel.

As a common method for adding Ca to molten steel, the following method is known: first, in a secondary refining step conducted after steel has been tapped from a converter, molten steel contained in a ladle and deoxidized with aluminum (Al) is desulfurized with flux in order to reduce the sulfur content in the molten steel. Subsequently, Ca is added to the molten steel by an injection method or a wire feeding method while a vacuum degassing refining is performed in a vacuum degassing apparatus, such as an RH vacuum degassing apparatus, or within the period of time from when the vacuum degassing refining is finished to when casting with a continuous casting machine is started.

An "injection method" is a method in which powder and granular Ca-containing alloy or Ca compound is blown into the bottom of a ladle together with carrier gas through an injection lance immersed in molten steel. A "wire feeding method" is a method in which a steel-sheathed calcium-wire is fed into molten steel at a high rate using the driving force of pinch rollers so as to reach the bottom of a ladle. The "steel-sheathed calcium-wire" is a molded body which encapsulates powder and granular Ca-containing alloy in a steel-sheath. In the above case, the molten steel may be stirred with an inert gas blown into the molten steel through an introduction pipe or porous plug attached to the ladle in order to increase the uniformity of the reaction that occurs in the molten steel.

An injection method and a wire feeding method are addition methods devised as means for increasing the yield of addition of Ca by adding Ca to the bottom of a steel bath, to which the static pressure of the molten steel is applied, with consideration to the high vapor pressure of Ca. There have been proposed various means for improving the addition conditions which are based on the above methods and intend to further increase the yield of addition of Ca.

For example, as an example of the studies of conditions for addition of Ca, Patent Literature 1 proposes a method in which the rate at which carrier gas is blown into steel is controlled appropriately in accordance with the rate at which a Ca-containing substance is added to the steel in order to add an adequate amount of Ca-containing substance to the steel. However, in Patent Literature 1, the type of the Ca-containing substance is not specified. Moreover, no consideration is given to the impact of the alloy composition of the Ca-containing substance on yield.

Patent Literature 2 discloses a method for adding Ca to non-oriented electrical steel in which the Ca-containing alloy added satisfies the following conditions: the Ca-containing alloy is subjected to a passivation treatment, and the composition of the Ca-containing alloy is specified to a composition containing Ca; 18% to 27% by mass, Mg (magnesium); 2% to 6% by mass, Si; 20% to 35% by mass, Al; 1% to 9% by mass, Zr (zirconium); 1% to 5% by mass, and the balance being Fe and incidental impurities, in order to reduce the reaction rate of Ca, increase the solubility of Ca, and thereby increase the yield of addition of Ca.

However, although the contents of Mg and Zr in the Ca-containing alloy disclosed in Patent Literature 2, which are used in order to increase the yield, are both specified to 6% by mass or less, no mention is made of the reasons for which the above composition is specified. In particular, since Mg has a higher vapor pressure than Ca and evaporates in molten steel faster than Ca, it is considered that the composition specified in Patent Literature 2 is not effective for increasing the solubility of Ca.

Patent Literature 3 proposes a method in which, other than a steel-sheathed calcium-wire or powder and granular Ca-containing alloy, a Ca-containing alloy is added to molten steel, molten Ca-containing alloy is charged into a closed container and the molten Ca-containing alloy contained in the closed container is pressure-injected into the molten steel through an injection pipe. However, in Patent Literature 3, it is necessary to use a heating apparatus for melting the Ca-containing alloy and a closed container for performing pressurization. This increases the costs and reduces ease of handling compared with a method in which a Ca-containing alloy is added to the steel at normal temperature by an injection method or a wire feeding method.

In Patent Literature 4, the position at which Ca-containing alloy is to be added to the steel is studied. Specifically, Patent Literature 4 proposes a method in which the addition of a steel-sheathed calcium-wire is done while a treatment is performed with an RH vacuum degassing apparatus. According to Patent Literature 4, feeding a steel-sheathed calcium-wire to a molten steel discharge port of a vacuum vessel, in which the flow of the molten steel is weak and the static pressure of the molten steel is high, increases the likelihood of the Ca-containing alloy powder being discharged into the molten steel, reduces the evaporative loss, and consequently increases the addition yield.

However, adding Ca to molten steel while the treatment is performed with an RH vacuum degassing apparatus disadvantageously increases the likelihood of Ca evaporating when the molten steel including Ca is circulated in the vacuum vessel. In another case, non-metallic inclusions may be formed. This accelerates floatation separation. Therefore, in Patent Literature 4, there is a limit to the increase in the yield of addition of Ca.

Citation List

Patent Literature

PTL 1: Japanese Unexamined Patent Application Publication No. 8-157934
PTL 2: Japanese Unexamined Patent Application Publication (Translation of PCT Application) No. 2015-515541
PTL 3: Japanese Unexamined Patent Application Publication No. 59-159921
PTL 4: Japanese Unexamined Patent Application Publication No. 10-245621

Summary of Invention

Technical Problem

Although there have been proposed various methods for adding Ca to molten steel as described above, there have been no effective means that enables the addition of Ca at a high addition yield.

For devising a Ca addition method in which the yield of addition of Ca is increased, it is necessary to study not only the addition conditions, such as the amount of Ca-containing alloy added, the rate at which the Ca-containing alloy is added, and the rate at which a carrier gas is blown, but also the composition of the Ca-containing alloy that is to be added. Moreover, in consideration of cost-effectiveness and ease of handling, the addition method needs to be readily implemented using an injection method or a wire feeding method, which is known in the related art.

The present invention was made in view of the above-described issues. An object of the present invention is to provide a method for adding Ca to molten steel with which Ca can be added to molten steel contained in a ladle at a high addition yield, by improving the composition of a Ca-containing alloy added to the molten steel.

Solution to Problem

The summary of the present invention that addresses the above issues is as follows.

[1] A method for adding Ca (calcium) to molten steel, the method including adding Ca to molten steel contained in a ladle by addition of a Ca-containing alloy (calcium-containing alloy) containing Mg (magnesium), the Ca-containing alloy satisfying Formula (1) below.

$$0.3 \leq \text{Mg content (mass\%)/Ca content (mass\%)} \leq 1.0 \cdot\cdot$$

(1)

[2] The method for adding Ca to molten steel described in [1], wherein the Ca-containing alloy is added to the molten steel contained in the ladle after the molten steel has been refined with an RH vacuum degassing apparatus.

[3] The method for adding Ca to molten steel described in [1] or [2], wherein the Ca-containing alloy contains Ca: 15% to 30% by mass, Mg: 10% to 20% by mass, and Si (silicon): 40% to 60% by mass, with the balance being Fe (iron) and incidental impurities.

[4] The method for adding Ca to molten steel described in [1] or [2], wherein the Ca-containing alloy contains Ca: 15% to 30% by mass, Mg: 10% to 20% by mass, and Al (aluminum): 40% to 60% by mass, with the balance being Fe and incidental impurities.

[5] The method for adding Ca to molten steel described in any one of [1] to [4], wherein Ca is added to the molten steel by using a steel-sheathed calcium-wire produced by encapsulating the Ca-containing alloy with a steel sheet, and wherein a rate at which the steel-sheathed calcium-wire is added to the molten steel is set such that a net amount of Ca added is 5 to 15 kg per minute and a net amount of Mg added is 4 to 10 kg per minute.

Advantageous Effects of Invention

According to the present invention, a Ca-containing alloy that contains Ca and Mg as components is added to molten steel. This suppresses a local reduction in Ca solubility as a result of a Mg gas stirring the molten steel. In addition, the amount of Ca consumed by the reduction reaction between Ca and lower oxides is reduced as a result of Mg reducing non-metallic inclusions. Consequently, the yield of addition of Ca can be increased.

Description of Embodiments

The method for adding Ca (calcium) to molten steel according to the present invention is described specifically below.

The method for adding Ca to molten steel according to the present invention necessarily includes adding Ca (calcium) to molten steel contained in a ladle by the addition of a Ca-containing alloy (calcium-containing alloy) containing, as components, a predetermined amount of Mg (magnesium) in addition to a predetermined amount of Ca.

The reasons for which the use of a Ca-containing alloy containing predetermined amounts of Ca and Mg as components increases the yield of addition of Ca are described below.

Since Mg is an element having a higher vapor pressure and a lower melting point than Ca, Mg is easier to evaporate than Ca. Mg is also a deoxidizing element having a strong affinity for oxygen, similarly to Ca. Therefore, when the Ca-containing alloy containing Ca and Mg is added to molten steel, evaporation of Mg occurs earlier than that of Ca. In the case where the ratio of the Mg content in the Ca-containing alloy to the Ca content in the Ca-containing alloy falls within a predetermined range, part of the Mg gas dissolves in the molten steel and, consequently, reduction of non-metallic inclusions caused by dissolved Mg (Mg dissolved and included in the molten steel) and stirring of the molten steel caused by the Mg gas occur simultaneously.

The stirring of the molten steel eliminates the risk of the Ca concentration in the molten steel increasing locally at the position at which the Ca-containing alloy is added. This suppresses a reduction in the amount of Ca dissolved, which occurs due to the local increase in the Ca concentration. Furthermore, the reduction of non-metallic inclusions caused by dissolved Mg reduces the amount of lower oxides included in the molten steel. This reduces the amount of Ca consumed by the reduction reaction between the dissolved Ca and the lower oxides. For the above reasons, the yield of addition of Ca is increased.

For producing the above-described advantageous effects of Mg, it is necessary that the ratio of Mg content to the Ca content in the Ca-containing alloy containing Ca and Mg satisfy Formula (1) below.

$$0.3 \leq \text{Mg content (mass\%)/Ca content (mass\%)} \leq 1.0 \cdot\cdot$$

(1)

If the Mg content is less than 0.3 times the Ca content, the advantageous effects of Mg is not achieved at a sufficient level and the yield of addition of Ca may fail to be increased. In order to increase the yield of addition of Ca with consistency, the Mg content is preferably 0.4 times or more and is more desirably 0.5 times or more the Ca content. If the Mg content is more than 1.0 times the Ca content, Mg gas bubbles disadvantageously include Ca as a gas component and the yield of addition of Ca is rather reduced.

Compared with the case where an alloy containing Ca (not including Mg) and an alloy containing Mg (not including Ca) are physically mixed with each other and added to molten steel or such alloys are individually added to molten steel at a time, the use of the Ca-containing alloy that includes both Ca and Mg enables the yield of addition of Ca to be increased with consistency. This is because the use of the Ca-containing alloy containing Ca and Mg enables the above-described advantageous effects of Mg, that is, the stirring of the molten steel by a Mg gas and the reduction of non-metallic inclusions by dissolved Mg, to occur uniformly in the molten steel contained in a ladle and, therefore, nonuniformity in the concentrations of Ca and Mg in the molten steel, which are influenced by the addition position, does not occur.

In the method for adding Ca to molten steel according to the present invention, Mg added to molten steel is consumed for stirring the molten steel in the form of a Mg gas and reducing non-metallic inclusions in the form of dissolved Mg. Thus, Mg does not necessarily remain in the molten steel as a component.

The timing at which the Ca-containing alloy containing Ca and Mg is added to molten steel contained in a ladle is preferably within the period of time from when vacuum degassing refining of steel tapped from a converter to a ladle with an RH vacuum degassing apparatus is finished to when continuous casting with a continuous casting machine is started. This is because performing vacuum degassing refining with a RH vacuum degassing apparatus enhances the cleanliness of the molten steel contained in a ladle and reduces the reaction between Ca dissolved in the molten steel and dissolved oxygen and lower oxides included in the molten steel and, since the amount of Ca consumed by these reactions is reduced, the amount of Ca dissolved in the molten steel is increased.

The Ca-containing alloy used in the method for adding Ca to molten steel according to the present invention is suitably a Ca-containing alloy that contains Ca: 15% to 30% by mass, Mg: 10% to 20% by mass, and Si (silicon): 40% to 60% by mass, with the balance being Fe (iron) and incidental impurities or a Ca-containing alloy that contains Ca: 15% to 30% by mass, Mg: 10% to 20% by mass, and Al (aluminum): 40% to 60% by mass, with the balance being Fe and incidental impurities.

The reasons for which the above compositions are suitable for the Ca-containing alloy are described below.

The higher the Ca content in the Ca-containing alloy, the smaller the mass of the Ca-containing alloy that needs to be added and the greater the advantages from a cost-effectiveness viewpoint. However, if the Ca content is more than 30% by mass, the Ca-containing alloy becomes unstable and causes a severe reaction when added to molten steel. That is, it becomes difficult to handle the Ca-containing alloy. If the Ca content is less than 15% by mass, the amount of service time required for the addition of a predetermined amount of Ca is increased and productivity is reduced accordingly. Furthermore, the mass of the Ca-containing alloy that needs to be added is considerably increased disadvantageously from a cost-effective viewpoint. Accordingly, the Ca content in the Ca-containing alloy is preferably 15% to 30% by mass.

If the Mg content in the Ca-containing alloy is less than 10% by mass, the driving force sufficient for causing Mg to dissolve in the molten steel is not produced and, consequently, Mg is discharged to the atmosphere in the form of gas without reducing non-metallic inclusions to a sufficient degree. In such a case, the yield of addition of Ca may fail to be increased. If the Mg content is more than 20% by mass, Mg fails to form a stable alloy with Ca. Moreover, the advantageous effects of addition of Mg become saturated. Accordingly, the Mg content in the Ca-containing alloy is preferably 10% to 20% by mass.

Si is a component for stabilizing an alloy containing Ca and Mg. The Si content in the Ca-containing alloy is determined in accordance with the Ca and Mg contents described above and the content of Fe, which is included in the alloy as an impurity. Specifically, the Si content in the Ca-containing alloy is preferably 40% to 60% by mass.

The alloy can also be stabilized by alloying Ca and Mg with Al instead of Si. In the case where Ca and Mg are alloyed with Al, similarly to the above Si content, the Al content in the Ca-containing alloy is preferably 40% to 60% by mass.

In the method for adding Ca to molten steel according to the present invention, the Ca-containing alloy can be added to molten steel by either an injection method or a wire feeding method. It is not necessary to newly introduce an adding equipment. Note that, when an injection method and a wire feeding method are compared with each other, since a Ca-containing alloy containing Ca and Mg is used and the gas produced by the evaporation of Mg stirs the molten steel in the present invention, a wire feeding method eliminates the need to blow an inert gas through an injection lance and simplifies the operation of addition of Ca, compared with an injection method in which powder and granular material is blown into the molten steel using a carrier gas while the molten steel is stirred.

In the case where a wire feeding method is used for implementing the method for adding Ca to molten steel according to the present invention, the rate at which a steel-sheathed calcium-wire is added to molten steel is preferably set such that the net amount of Ca added is 5 to 15 kg per minute and the net amount of Mg added is 4 to 10 kg per minute. The rate at which the steel-sheathed calcium-wire is added to the molten steel is preferably set to 0.15 to 0.20 kg/(molten steel-t ·min). When the addition rate falls within the above range, the yield of addition of Ca can be maintained at a high level. Note that the "steel-sheathed calcium-wire" is a molded body which encapsulates powder and granular Ca-containing alloy in a steel sheath.

As described above, according to the present invention, since a Ca-containing alloy including Ca and Mg as components is added to molten steel, the risk of Ca solubility being locally reduced is suppressed as a result of the Mg gas stirring the molten steel. In addition, as a result of Mg reducing non-metallic inclusions, the amount of Ca consumed by the reduction reaction between Ca and lower oxides can be reduced. Consequently, the yield of addition of Ca can be increased.

EXAMPLES

Tests in which Ca-containing alloys having different compositions were added to molten steel contained in a ladle and HIC-resistant steels were produced were conducted. In each of the tests, molten pig iron was subjected to decarburization refining in a converter to prepare 250 tons of molten steel. The molten steel was tapped into a ladle. Then, the molten steel contained in the ladle was subjected to a desulfurization treatment in a ladle refining furnace. Subsequently, vacuum degassing refining was performed using an RH vacuum degassing apparatus. In the period of time from when the refining in the RH vacuum degassing apparatus had been finished to when continuous casting in a continuous casting machine was started, a specific one of the Ca-containing alloys having different compositions was added to the molten steel contained in the ladle by a wire feeding method.

In each of the tests, metal Al was added to the ladle after the molten steel had been tapped from the converter in order to deoxidize 250 tons of molten steel. In the subsequent desulfurization treatment step conducted in the ladle refining furnace, a $CaO\text{-}Al_2O_3\text{-}SiO_2$ flux was used as a desulfurizing agent, and the molten steel was heated and the desulfurizing agent was formed into slag using the arc heating from black smoke electrodes. Subsequently, an argon gas serving as a stirring gas was blown into the molten steel at 100 to 150 $Nm^3$/hr through an injection lance immersed in the molten steel. The molten steel and the desulfurizing agent were mixed with each other while being stirred in order to perform a desulfurization treatment.

Subsequent to the desulfurization treatment, vacuum degassing refining, that is, specifically, a degassing treatment, adjustment of composition of the molten steel, and floatation separation of non-metallic inclusions by stirring of the molten steel, was performed using an RH vacuum degassing apparatus in order to adjust the total oxygen concentration in the molten steel to 0.0020% by mass or less. The amount of time during which the vacuum degassing refining treatment is performed was 20 minutes. All the tests were conducted under the same conditions. Table 1 lists the major components of the molten steel that had been subjected to vacuum degassing refining.

[Table 1]

| Composition of molten steel (mass%) | | | | | |
|---|---|---|---|---|---|
| C | Si | Mn | P | S | Al |
| 0.04 | 0.2 | 1.3 | 0.004 | 0.0008 | 0.04 |

As a Ca-containing alloy added to molten steel contained in the ladle, Ca-containing alloys containing Ca and Mg (Ca-Mg-Si alloys and Ca-Mg-Al alloys) and, for comparison, Ca-containing alloys that contain Ca but do not contain Mg (Ca-Si alloys) were used.

After the vacuum degassing refining in the RH vacuum degassing apparatus had been finished, the ladle containing the molten steel was removed from the RH vacuum degassing apparatus. Subsequently, a Ca-containing alloy was added to the molten steel contained in the ladle with a wire feeding apparatus. Using the wire feeding apparatus, a steel-sheathed calcium-wire (steel sheet thickness: 0.04 cm) that encapsulated powder and granules of the Ca-containing alloy (a Ca-Mg-Si alloy, a Ca-Mg-Al alloy, or a Ca-Si alloy) in the steel sheath was added to the molten steel at an addition rate of 0.14 to 0.21 kg/(molten steel-t ·min). The amount of the steel-sheathed calcium-wire added was 100 kg per charge. The temperature of the molten steel was 1580°C to 1620°C when the Ca-containing alloy was added to the molten steel.

As for the compositions of the Ca-Mg-Si alloys, the Ca content was changed within a range of 15% to 30% by mass and the Mg content was changed within a range of 5% to 25% by mass. As for the compositions of the Ca-Mg-Al alloys, the Ca content was changed within a range of 20% to 25% by mass and the Mg content was changed within a range of 15% to 20% by mass. On the other hand, as for the compositions of the Ca-Si alloys, the Ca content was fixed at 30 by mass.

Before and after the Ca-containing alloy was added to the molten steel, an analysis sample was taken from the molten steel, and the Ca concentration in the molten steel was analyzed in order to determine the yield of addition of Ca in each test. The yield of addition of Ca was calculated using Formula (2) below.

$$\text{Ca addition yield (\%)} = [\text{Ca concentration in molten steel after Ca was added (mass\%)} - \text{Ca concentration in molten steel before Ca was added (mass\%)}] \times 1000/\text{Amount of Ca added (kg/molten steel-t)} \cdots (2)$$

Table 2 lists the compositions of the Ca-containing alloys used in the tests, the rates at which the Ca-containing alloys were added in the tests, and the Ca addition yields. Note that, in the remarks column of Table 2, the tests in which the method for adding Ca to a molten steel according to the present invention was used are denoted by "Invention example", while the other tests are denoted by "Comparative example".

[Table 2]

| Test No | Composition of Ca-containing alloy | | | | | kg/(molten steel-t·min) | Rate of addition of Ca-containing alloy | | Ca addition yield (%) | Remarks |
|---|---|---|---|---|---|---|---|---|---|---|
| | Ca (mass%) | Mg (mass%) | Si (mass%) | Al (mass%) | Mg/Ca | | Addition rate in terms of net Ca (kg/min) | Addition rate in terms of net Mg (kg/min) | | |
| 1 | 30 | - | 60 | - | - | 0.18 | 13.5 | 0 | 25 | Comparative example |
| 2 | 30 | - | 60 | - | - | 0.21 | 15.7 | 0 | 13 | Comparative example |
| 3 | 30 | - | 60 | - | - | 0.20 | 15.0 | 0 | 16 | Comparative example |
| 4 | 30 | - | 60 | - | - | 0.19 | 14.2 | 0 | 22 | Comparative example |
| 5 | 30 | - | 60 | - | - | 0.15 | 11.2 | 0 | 20 | Comparative example |
| 6 | 30 | - | 60 | - | - | 0.14 | 10.5 | 0 | 18 | Comparative example |
| 7 | 21 | 5 | 55 | - | 0.24 | 0.18 | 9.5 | 2.2 | 23 | Comparative example |
| 8 | 20 | 25 | 50 | - | 1.25 | 0.18 | 9.0 | 11.2 | 25 | Comparative example |
| 9 | 20 | 10 | 55 | - | 0.50 | 0.18 | 9.0 | 4.5 | 31 | Invention example |
| 10 | 20 | 15 | 55 | - | 0.75 | 0.18 | 9.0 | 6.7 | 44 | Invention example |
| 11 | 20 | 20 | 55 | - | 1.00 | 0.18 | 9.0 | 9.0 | 45 | Invention example |
| 12 | 15 | 15 | 60 | - | 1.00 | 0.18 | 8.1 | 6.7 | 36 | Invention example |
| 13 | 20 | 15 | 55 | - | 0.75 | 0.18 | 9.0 | 6.7 | 44 | Invention example |
| 14 | 25 | 15 | 50 | - | 0.60 | 0.18 | 11.2 | 6.7 | 45 | Invention example |

| Test No | Composition of Ca-containing alloy | | | | | Rate of addition of Ca-containing alloy | | | Ca addition yield (%) | Remarks |
|---|---|---|---|---|---|---|---|---|---|---|
| | Ca (mass%) | Mg (mass%) | Si (mass%) | Al (mass%) | Mg/Ca | kg/(molten steel-t·min) | Addition rate in terms of net Ca (kg/min) | Addition rate in terms of net Mg (kg/min) | | |
| 15 | 30 | 15 | 40 | - | 0.50 | 0.18 | 13.5 | 6.7 | 42 | Invention example |
| 16 | 30 | 10 | 50 | - | 0.33 | 0.18 | 13.5 | 4.5 | 35 | Invention example |
| 17 | 20 | 15 | 55 | - | 0.75 | 0.21 | 10.5 | 7.8 | 30 | Invention example |
| 18 | 20 | 15 | 55 | - | 0.75 | 0.20 | 10.0 | 7.5 | 35 | Invention example |
| 19 | 20 | 15 | 55 | - | 0.75 | 0.19 | 9.5 | 7.1 | 44 | Invention example |
| 20 | 20 | 15 | 55 | - | 0.75 | 0.15 | 7.5 | 5.6 | 33 | Invention example |
| 21 | 20 | 15 | 55 | - | 0.75 | 0.14 | 7.0 | 5.2 | 30 | Invention example |
| 22 | 20 | 15 | - | 55 | 0.75 | 0.18 | 9.0 | 6.7 | 44 | Invention example |
| 23 | 20 | 20 | - | 55 | 1.00 | 0.18 | 9.0 | 9.0 | 45 | Invention example |
| 24 | 25 | 15 | - | 50 | 0.60 | 0.18 | 11.2 | 6.7 | 45 | Invention example |

As is clear from the results listed in Table 2, it was confirmed that, in Invention examples, a high yield of addition of Ca was achieved compared with Comparative examples. Thus, it was confirmed that the use of a Ca-containing alloy that contains, as a component, a predetermined amount of Mg in addition to a predetermined amount of Ca enables Ca to be added at a high Ca addition yield.

**Claims**

1.  A method for adding Ca (calcium) to molten steel, the method comprising adding Ca to molten steel contained in a ladle by addition of a Ca-containing alloy (calcium-containing alloy) containing Mg (magnesium), the Ca-containing alloy satisfying Formula (1) below.

$$0.3 \leq \text{Mg content (mass\%)/Ca content (mass\%)} \leq 1.0 \cdots (1)$$

2.  The method for adding Ca to molten steel according to Claim 1, wherein the Ca-containing alloy is added to the molten steel contained in the ladle after the molten steel has been refined with an RH vacuum degassing apparatus.

3.  The method for adding Ca to molten steel according to Claim 1 or 2, wherein the Ca-containing alloy contains Ca: 15% to 30% by mass, Mg: 10% to 20% by mass, and Si (silicon): 40% to 60% by mass, with the balance being Fe (iron) and incidental impurities.

4.  The method for adding Ca to molten steel according to Claim 1 or 2, wherein the Ca-containing alloy contains Ca: 15% to 30% by mass, Mg: 10% to 20% by mass, and Al (aluminum): 40% to 60% by mass, with the balance being Fe and incidental impurities.

5.  The method for adding Ca to molten steel according to any one of Claims 1 to 4, wherein Ca is added to the molten steel by using a steel-sheathed calcium-wire produced by encapsulating the Ca-containing alloy with a steel sheet, and wherein a rate at which the steel-sheathed calcium-wire is added to the molten steel is set such that a net amount of Ca added is 5 to 15 kg per minute and a net amount of Mg added is 4 to 10 kg per minute.

<table>
<tr><td colspan="2" align="center">**INTERNATIONAL SEARCH REPORT**</td><td>International application No.<br>PCT/JP2020/023389</td></tr>
</table>

| A. CLASSIFICATION OF SUBJECT MATTER |
|---|
| C21C 7/04(2006.01)i; C22C 21/00(2006.01)i; C22C 28/00(2006.01)i; C22C 30/00(2006.01)i; B22D 1/00(2006.01)i<br>FI:    C21C7/04 C; B22D1/00 E; B22D1/00 J; C22C21/00 N; C22C28/00 B;    C22C30/00 |
| According to International Patent Classification (IPC) or to both national classification and IPC |

| B. FIELDS SEARCHED |
|---|
| Minimum documentation searched (classification system followed by classification symbols)<br>C21C7/04; C22C21/00; C22C28/00; C22C30/00; B22D1/00 |
| Documentation searched other than minimum documentation to the extent that such documents are included in the fields searched<br>   Published examined utility model applications of Japan    1922-1996<br>   Published unexamined utility model applications of Japan    1971-2020<br>   Registered utility model specifications of Japan    1996-2020<br>   Published registered utility model applications of Japan    1994-2020 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X | CN 106086303 A (SHANGHAI UNIVERSITY) 09.11.2016 (2016-11-09) paragraphs [0007]-[0015], [0026]-[0029] | 1-3, 5 |
| X<br>Y | CN 102605143 A (BAOSHAN IRON & STEEL CO., LTD.) 25.07.2012 (2012-07-25) paragraphs [0024], [0029], [0044] | 1-2, 4<br>5 |
| X<br>Y | CN 1831148 A (LI, Xingyou) 13.09.2006 (2006-09-13) claims 1-2, examples 1-3 | 1-2, 4<br>5 |
| X<br>Y | JP 9-263820 A (KAWASAKI STEEL CORP.) 07.10.1997 (1997-10-07) paragraph [0030] | 1-2<br>5 |
| X<br>Y | JP 35-9304 B1 (KINZOKU ZAIRYO KENKYUSHOCHO) 16.07.1960 (1960-07-16) page 1, left column, lines 2-4, table 1 | 1-2<br>5 |

☒   Further documents are listed in the continuation of Box C.       ☒   See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>   12 August 2020 (12.08.2020) | Date of mailing of the international search report<br>   25 August 2020 (25.08.2020) |
|---|---|
| Name and mailing address of the ISA/<br>  Japan Patent Office<br>  3-4-3, Kasumigaseki, Chiyoda-ku,<br>  Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2020/023389

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2013-144843 A (JFE STEEL CORPORATION) 25.07.2013 (2013-07-25) claim 1, paragraphs [0005], [0013]-[0014] | 5 |
| A | JP 8-225822 A (NIPPON STEEL CORP.) 03.09.1996 (1996-09-03) claims 1-7, table 1 | 1-5 |

Form PCT/ISA/210 (continuation of second sheet) (January 2015)

**INTERNATIONAL SEARCH REPORT**

Information on patent family members

International application No.

PCT/JP2020/023389

| Patent Documents referred in the Report | Publication Date | Patent Family | Publication Date |
|---|---|---|---|
| CN 106086303 A | 09 Nov. 2016 | (Family: none) | |
| CN 102605143 A | 25 Jul. 2012 | (Family: none) | |
| CN 1831148 A | 13 Sep. 2006 | (Family: none) | |
| JP 9-263820 A | 07 Oct. 1997 | US 6120578 A example 3 BR 9702137 A CA 2220272 A1 CN 1185813 A EP 829546 A1 KR 10-1999-0021928 A WO 1997/036010 A1 | |
| JP 35-9304 B1 | 16 Jul. 1960 | (Family: none) | |
| JP 2013-144843 A | 25 Jul. 2013 | (Family: none) | |
| JP 8-225822 A | 03 Sep. 1996 | (Family: none) | |

Form PCT/ISA/210 (patent family annex) (January 2015)

**EP 3 971 306 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8157934 A
- JP 2015515541 W
- JP 59159921 A
- JP 10245621 A